# EUROPÄISCHE PATENTSCHRIFT

(11) **EP 1 901 941 B1**
(45) Veröffentlichungstag und Bekanntmachung des Hinweises auf die Patenterteilung: **26.12.2012**
(21) Anmeldenummer: 05760700.4
(22) Anmeldetag: 12.07.2005
(51) Int. Cl.: B60R 21/013, B60T 7/22

(54) **VERFAHREN UND VORRICHTUNG ZUR ANSTEUERUNG EINES INSASSENSCHUTZMITTELS**
METHOD AND DEVICE FOR TRIGGERING A PASSENGER PROTECTING MEANS
PROCEDE ET DISPOSITIF DE COMMANDE D'UN MOYEN DE PROTECTION D'UN PASSAGER

(43) Veröffentlichungstag der Anmeldung: 26.03.2008
(73) Patentinhaber: Daimler AG, 70327 Stuttgart (DE)
(72) Erfinder: REUTTER, Dominic, 73102 Birenbach (DE); BERNZEN, Werner, 71139 Ehningen (DE)
(74) Vertreter: JENSEN & SON
(86) Internationale Anmeldenummer: PCT/EP2005/007521
(87) Internationale Veröffentlichungsnummer: WO 2007/006326

(56) Entgegenhaltungen:
- EP-A- 1 247 699
- WO-A-2004/085220
- DE-C1- 10 121 386
- DE-C1- 10 121 956

## Beschreibung

Die Erfindung betrifft ein Verfahren gemäß dem Oberbegriff des Patentanspruchs 1 und eine Vorrichtung zur Ansteuerung eines reversiblen Insassenschutzmittels in einem Fahrzeug mit einer Sensorik, welche Fahrzustandsdaten erfasst, und mit einem reversiblen Insassenschutzmittel, welches vor dem Kollisionszeitpunkt ausgelöst und dadurch in Wirkstellung gebracht werden kann.

Unter einer kritischen Fahrsituation oder einem kritischen Fahrzustand wird beispielsweise eine Notbremsung, ein Schleudern des Fahrzeugs oder eine drohende Kollision verstanden. In solchen kritischen Situationen werden vorsorgliche Maßnahmen zum Insassenschutz aktiviert und deaktiviert, d.h. wieder rückgängig gemacht, wenn die Gefahr vorüber ist.

Neben den gängigen Rückhaltemitteln wie Airbag und Sicherheitsgurt mit Gurtstraffer gibt es eine Reihe weiter ansteuerbarer Insassenschutzmittel in Fahrzeugen, welche eine Rückhaltewirkung und/oder eine energieabsorbierende Wirkung zum Schutz eines Insassen bei einer Kollision entfalten. Beispiele für solche Insassenschutzmittel sind verfahrbare Prallkörper, Kissen und Kopfstützen, welche mittels einer Ansteuerung in Größe, Härte, Form und Lage verändert werden können. Neben diesen Insassenschutzmitteln können weitere ansteuerbare Schutzmittel vorgesehen werden, welche die Unfallfolgen für einen Fahrzeuginsassen vermindern, indem der Insasse positioniert wird, d.h. er wird in eine für einen Unfall günstige Stellung gebracht. Mittel zum Positionieren des Insassen sind beispielsweise eine elektrische Sitzverstellung, eine Kopfstützenverstellung, ein Gurt-Vorstraffer und verfahrbare Polster.

Bei der Ansteuerung der Insassenschutzmittel zur Verminderung von Unfallfolgen im Straßenverkehr kann unterschieden werden zwischen vorbeugenden Maßnahmen, welche vor einem Unfall ergriffen werden, und akuten Maßnahmen, welche nach einem erkannten Unfall ergriffen werden. Die Erfindung bezieht sich auf eine Ansteuerung eines Schutzmittels als vorbeugende Maßnahme, d.h. als präventive Schutzmaßnahme.

Im Stand der Technik ist entsprechend dem Oberbegriff des Anspruchs 1 dazu aus der DE 101 21 386 C1 ein Verfahren zum Ansteuern eines reversiblen Insassenschutzmittels in einem Kraftfahrzeug mit einer Fahrzustandssensorik, welche Fahrzustandsdaten erfasst, und mit einem reversiblen Insassenschutzmittel, welches vor dem Kollisionszeitpunkt ausgelöst und dadurch in Wirkstellung gebracht werden kann, bekannt. Hierbei werden die Fahrzustandsdaten hinsichtlich eines Zustands "Notbremsung" überwacht, und bei ermitteltem Zustand "Notbremsung" wird das Insassenschutzmittel angesteuert. Von der Datenverarbeitungseinrichtung wird zusätzlich ein Zustand "Übersteuern" und ein Zustand "Untersteuern" ermittelt. Wenn von der Datenverarbeitungseinrichtung der Zustand "Notbremsung" und/oder der Zustand "Übersteuern" und/oder der Zustand "Untersteuern" erkannt wird, wird das reversible Insassenschutzsystem angesteuert. Nach Wegfall des kritischen Fahrzustands wird das angesteuerte Insassenschutzsystem deaktiviert.

Üblicherweise wird die für eine Notbremsung erforderliche Bremsverzögerung anhand eines Umgebungserfassungssystems, z.B. einer Radareinheit, einer Ultraschallmesseinheit oder einer optischen Erfassungseinheit ermittelt. Dabei wird das Vorliegen einer kritischen Situation, insbesondere eine sich anbahnende Kollision anhand des Abstands und der Relativgeschwindigkeit zu einem Hindernis bestimmt.

Aus der DE 36 37 165 A1 oder der DE 101 21 956 C1 ist ein Verfahren zum Ansteuern eines Insassenschutzsystems für ein Fahrzeug bekannt, bei dem mittels einer Umfeld- und/oder Abstandssensorik ein Hindernis vor dem Fahrzeug erkannt werden kann und bei Erkennung eines Hindernisses eine notwendige Bremsverzögerung ermittelt wird, die benötigt wird, um das Fahrzeug noch vor dem Hindernis zum Stehen zu bringen. Weiterhin wird die ermittelte notwendige Bremsverzögerung mit einer maximal möglichen Bremsverzögerung verglichen und ein Insassenschutzmittel in Betrieb gesetzt, sobald die notwendige Bremsverzögerung die maximal mögliche Bremsverzögerung überschreitet.

Die ältere aber erst nach der vorliegenden Anmeldung zur Veröffentlichung vorgesehenen Patentanmeldung DE 102004018394.5 betrifft ein vergleichbares Verfahren wie voran stehend beschrieben, bei dem die notwendige Bremsverzögerung aber nur dann ermittelt wird oder die ermittelte notwendige Bremsverzögerung nur dann hinsichtlich einer Schwellenüberschreitung ausgewertet wird, wenn ein Fahrer des Fahrzeugs ein Bremsbetätigungselement zur Initiierung eines Bremsvorgangs betätigt hat.

Der Erfindung liegt die Aufgabe zugrunde, ein verbessertes Verfahren und eine Vorrichtung der eingangs genannten Art anzugeben, bei denen die vorbeugenden Auslösung von Insassenschutzmitteln vom Fahrer möglichst plausibel empfunden werden.

Die Aufgabe wird durch ein Verfahren gelöst, welches die in Anspruch 1 angegebenen Merkmale aufweist. Hinsichtlich der Vorrichtung wird die Aufgabe erfindungsgemäß gelöst durch die Merkmale des nebengeordneten Vorrichtungsanspruchs.

Vorteilhafte Ausgestaltungen der Erfindung sind Gegenstand der Unteransprüche.

Das erfindungsgemäße Verfahren sieht vor, dass zur Ansteuerung eines reversiblen Insassenschutzmittels in einem Fahrzeug von einer vorausschauenden Umgebungserfassungseinheit eine Soll-Bremsverzögerung ermittelt wird, anhand derer ein Vorliegen mindestens eines kritischen Fahrzustands bestimmt wird und bei Vorliegen des kritischen Fahrzustands das Insassenschutzmittels aktiviert wird, wobei die Soll-Bremsverzögerung anhand einer von der Fahrzeuggeschwindigkeit abhängigen Verzögerungskennlinie geprüft wird. Die vorbeugende Ansteuerung des reversiblen Insassenschutzmittels erfolgt dann, wenn die ermittelte angeforderte Bremsverzögerung oberhalb der Verzögerungskennlinie liegt.

Ein reversibles Insassenschutzmittel ist dabei ein Mittel, dessen Zweck es ist, die Belastung eines Fahrzeuginsassen im Falle einer Kollision zu vermindern. Hierbei kann das Schutzmittel mehrmals durch Aktivierung vom Ausgangszustand in einen Wirkzustand gebracht, und durch Deaktivierung aus dem Wirkzustand wieder in den Ausgangszustand zurückversetzt werden. Als reversibles Insassenschutzmittel werden beispielsweise eine elektrische Sitzverstellvorrichtung, ein reversibler Gurtstraffer, eine elektrische Verstellvorrichtung von Fahrzeugöffnungen, eine Kopfstützenverstellung, ein verfahrbares Polster aktiviert. Auch elektrisch verstellbare Prallschutzvorrichtung können als reversible Insassenschutzmittel im Sinne der Erfindung aufgefasst werden, was auch z.B. reversibel aufstellbare Motorhauben oder ausfahrbare Stoßfänger umfassen soll, deren vorrangiges Ziel der Fußgängerschutz ist.

Der Vorteil dieses Verfahrens liegt darin, dass die unter Berücksichtigung des Abstands und des Relativabstands zum Hindernis z.B. von einem Radarsystem vorgegebene Soll-Bremsverzögerung anhand weiterer Bedingungen, welche die Kritikalität der Fahrsituation und deren Wahrnehmung durch den Fahrer wiederspiegeln, geprüft werden kann und für eine differenzierte Ansteuerung eines reversiblen Insassenschutzmittels genutzt werden kann. Damit wird das Insassenschutzmittel nur dann aktiviert, wenn die Aktivierung durch den Fahrer für die betreffende Fahrsituation auch als plausibel wahrgenommen wird. Insbesondere ist das subjektive Empfinden des Fahrers auf Bremsverzögerungen von der Fahrgeschwindigkeit abhängig.

Bei der Prüfung der vorgegebenen oder angeforderten Soll-Bremsverzögerung ist es möglich, mittels der von der Fahrzeuggeschwindigkeit abhängigen Verzögerungs- oder Beschleunigungskennlinie eine Abstimmung auf das subjektive Empfinden Fahrers zu erreichen, welches unter anderem von der Fahrgeschwindigkeit abhängig ist. Im Folgenden ist mit "Verzögerung" oder immer der Betrag einer beim Bremsen negativen Fahrzeugbeschleunigung gemeint.

In einer vorteilhaften Ausgestaltung ist vorgesehen, dass in einem Geschwindigkeitsbereich oberhalb einer Schwelle von ungefähr 60 km/h die Verzögerungskennlinie, welche einer kritischen Bremsverzögerung entspricht, kontinuierlich auf einen Sockelbetrag abfällt. Die angenommene Absenkung der Verzögerungskennlinie bei hohen Geschwindigkeiten und die darauf abgestimmte empfindlichere Aktivierung des Insassenschutzmittels wird vom Fahrer plausibel empfunden, da bei hohen Fahrgeschwindigkeit das subjektive Empfinden des Fahrers die Bremsverzögerungen kritischer wahrnimmt.

Als eine weitere Bedingung zur Beeinflussung der Verzögerungskennlinie kann unterschieden werden, ob entweder ein durch den Fahrer ausgelöster Notbremsvorgang, bei dem ein Radar gestütztes Bremsassistenzsystem eingreift, oder eine autonome, durch eine Umgebungserfassung ohne Zutun des Fahrers ausgelöste Teil- oder Notbremsung vorliegt. In beiden Fällen wird von der Umgebungserfassung aus Abstand und Relativgeschwindigkeit zum Hindernis die notwendige Soll-Bremsverzögerung ermittelt, welche dem vorliegenden Verfahren zugrunde liegt. Bei dem durch einen Fahrer ausgelösten Notbremsvorgang, welcher durch ein Bremsassistenzsystem unterstützt ist, wird aufgrund des Verhaltens des Fahrers auf eine Gefahren- oder Notsituation geschlossen. Hierzu wird mindestens ein Parameter wie der Bremsdruck, die Geschwindigkeit der Bremspedalbetätigung und die Geschwindigkeit der Rücknahme des Gaspedals zur Bewertung des Bremsvorgangs herangezogen. Zur Berechnung des notwendigen Bremsdruckes berechnet die Umgebungserfassungseinheit aus Abstand und Relativgeschwindigkeit zum Hindernis die notwendige Soll-Bremsverzögerung, um gegebenenfalls den vom Fahrer über das Bremspedal angeforderten Bremsdruck entsprechend zu korrigieren.

Da bei einem vom Fahrer ausgelösten Bremsvorgang, dieser auf die Gefahrensituation bereits vorbereitet ist, werden hohe Bremsverzögerung bewusst wahrgenommen und toleriert. Die Verzögerungskennlinie für die die kritische Bremsverzögerung liegt daher oberhalb einer Verzögerungskennlinie für eine autonome Teilbremsung, bei der ein Fahrer durch einen autonomen Bremsvorgang überrascht wird und zudem nicht gesichert ist, ob der Fahrer Maßnahmen zum Ausweichen vor dem Hindernis ergreift.

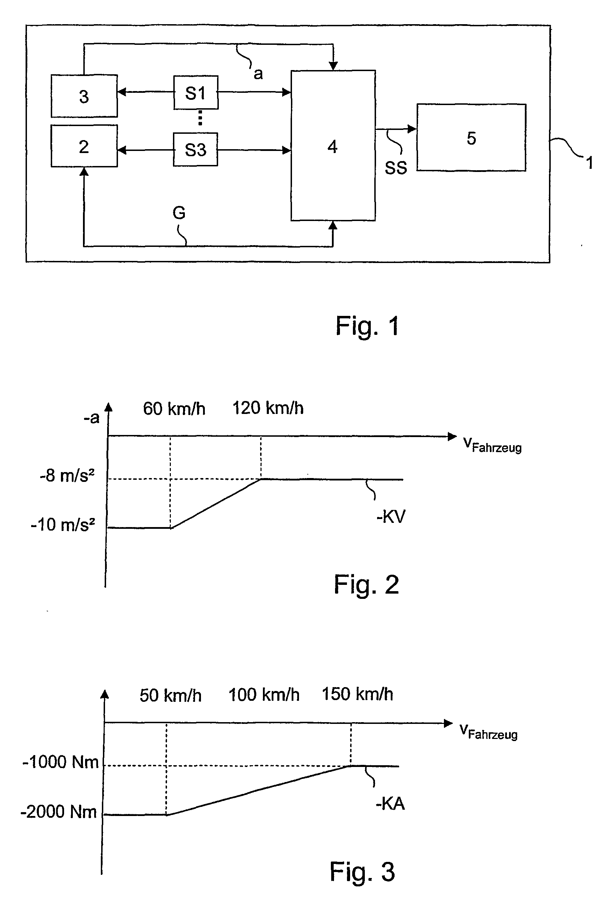

So wird beispielsweise (Fig. 2) bei einem durch den Fahrer ausgelösten Bremsvorgang in einem unteren Geschwindigkeitsbereich von 0 Km/h bis 60 km/h eine von der Umgebungserfassungseinheit vorgegebene Soll-Bremsverzögerung bis 10 m/s² wird noch als kontrolliert und zumutbar angesehen, so dass noch keine Insassenschutzmittel auszulösen sind, auch wenn im Grenzbereich die Belastung vom Fahrer bereits als maximal empfunden wird. Diese hohe Schwelle für die kritische Bremsverzögerung wird vom Fahrer als plausibel empfunden, weil eine Auslösung eines Insassenschutzmittels als unnötig empfunden würde. Im Übrigen kann bei einer von der Umgebungserfassungseinheit vorgegebenen Soll-Bremsverzögerungen bis zu 10 m/s² eine Kollision noch vermieden werden, weil bei einem Reibwert von µ = 1, 0 solche hohen Bremsverzögerung von einem Fahrzeugbremssystem durchaus aufgebracht werden können. Da keine Kollision zu erwarten ist, wäre eine Auslösung von Insassenschutzmitteln unplausibel. Ist jedoch die reale Verzögerung tatsächlich zu gering, würden im nächsten Schritt die Soll-Bremsverzögerung von der Umgebungserfassungseinheit erhöht, damit die Verzögerungskennlinie überschritten und die Insassenschutzmittel ausgelöst werden.

In einem mittleren Geschwindigkeitsbereich von 60 km/h bis 120 km/h wird eine Absenkung der kritischen Bremsverzögerung von 10 m/s² auf mindestens 8 m/s² angenommen. In einem oberen Geschwindigkeitsbereich von größer 120 km/h wird eine kritische Bremsverzögerung von ca. 8 m/s² angenommen. Die angenommene Absenkung der kritischen Bremsverzögerung bei hohen Geschwindigkeiten und die darauf abgestimmte empfindlichere Aktivierung des Insassenschutzmittels vom Fahrer als plausibel wahrgenommen wird, da bei höheren Fahrgeschwindigkeit Bremsverzögerungen als kritischer wahrgenommen werden. Andererseits ist die Schwelle immer noch so hoch gewählt, dass es zu keinen unerwünschten Auslösungen kommt. So liegt beispielsweise bei einer "sportlichen" und vom Fahrer mit Absicht durchgeführten Zielbremsung, z. B. auf ein stehendes Hindernis, die Bremsverzögerung üblicherweise im Bereich bis maximal 7 m/s².

Bei einem autonom ausgelösten Bremsvorgang ist die Verzögerungskennlinie empfindlicher auszulegen, was durch Anpassung der Kurvenparameter der voran stehend beschriebenen Verzögerungskennlinie erfolgen könnte. Zum Beispiel könnten die Eckwerte für die kritische Bremsverzögerung auf 3,5 m/s² und 1,5 m/s² herabgesetzt werden. Auch könnten die Geschwindigkeitsbereiche durch Eckwerte 50km/h und 150 km/h festgelegt werden (Fig. 3).

In einer weiteren Ausgestaltung ist vorgesehen, dass das Insassenschutzmittel nur dann angesteuert wird, wenn die Fahrzeuggeschwindigkeit größer einer vorgegebenen Mindestgeschwindigkeit ist. Als Mindestgeschwindigkeit wird beispielsweise eine Fahrzeuggeschwindigkeit von größer 30 km/h vorgegeben. Erst ab einer Fahrzeuggeschwindigkeit von größer 30 km/h wird das Insassenschutzmittel aktiviert. Diese Bedingung kann separat abgefragt oder durch eine geeignete kritische Verzögerungskennlinie implementiert werden, die unterhalb der Mindestgeschwindigkeit einen unerreichbaren hohen Wert annimmt.

In verschiedenen Ausgestaltungen kann die Verzögerungskennlinie zusätzlich in Abhängigkeit von anderen Parametern variiert werden.

Die mittels einer der vorausschauenden Umgebungserfassungseinheit, z.B. einer Radareinheit, eines Infrarot-Abstandsmessers, einem Ultraschallsensor oder einer Kamera bestimmte Bremsverzögerung repräsentiert eine zur Vermeidung einer Kollision erforderliche Soll-Bremsverzögerung. Zur Ermittlung der notwendigen, angeforderten Soll-Bremsverzögerung zur Kollisionsvermeidung wird typischerweise ein Fahrbahnreibwert von µ = 0,9 angenommen. Dieser Fahrbahnreibwert entspricht einem trockenen und normalen Untergrund, beispielsweise einer trockenen, asphaltierten Fahrbahn. Zur Berücksichtigung der unterschiedlichen Fahrbahnzustände und der unterschiedlichen Haftung kann in einer Weiterbildung die Verzögerungskennlinie in Abhängigkeit von einem z.B. sensorisch erfassten Fahrbahnreibwert vorgegeben werden. Beispielsweise können in Abhängigkeit vom Straßenzustand, z.B. einem Kopfsteinpflaster, einer Landstraße oder einer Autobahn, verschiedene Verzögerungskennlinie hinterlegt sein und diese beim Befahren der Straße entsprechend aktiviert werden. Dies setzt eine Ermittlung des Straßenzustandes voraus. Geeignete Verfahren sind aus dem Stand der Technik bekannt.

Die Berechnung der Soll-Bremsverzögerung auf Basis eines fest vorgegebenen Reibwertes von µ = 0,9 führt insbesondere bei glatten Straßenverhältnissen zu unrealistischen Ergebnissen: Auf einer glatten, z. B. nassen, Fahrbahn mit einem sehr geringen Reibwert würden bei einer starken Bremsung die Räder nicht mehr haften und abrollen, sondern gleiten, was zu einem Blockieren der Räder führt kann. Eine bei Annäherung an ein Hindernis vom Radarsystem vorgegebene Soll-Bremsverzögerung, welche noch unterhalb der Verzögerungskennlinie läge, wäre keinesfalls unkritisch, weil die Soll-Bremsverzögerung aufgrund des tatsächlichen geringen Reibwertes nämlich gar nicht aufgebracht werden könnte.

Im Folgenden wird ein Verfahren beschrieben, wie diesem Defizit auf einfache und kostengünstige Weise abgeholfen werden kann. Dies gilt allgemein für jedes Verfahren zur Auslösung von Insassenschutzsystemen, welche auf einer Auswertung der Soll-Bremsverzögerung basieren, der eine Annahme über einen konstanten Reibwert zugrunde liegt. Die Abfrage (low-µ-Abfrage) erfolgt in einem parallelen Auslösepfad.

Für einen Bremsvorgang mit Eingreifen eines Antiblockiersystems ABS (ABS-Fall), erfolgt in einer einfachen Ausgestaltung die sofortige Aktivierung des Insassenschutzmittels. Dies ist z.B. für den Fall sinnvoll, dass die vorausschauende Umgebungserfassungseinheit eine nicht zu vermeidende Kollision feststellt und eine maximale Bremsverzögerung vorgibt (Notbremsung), welche nur noch dem Abbau von kinetischer Energie im Vorfeld der Kollision dient. Dann ist nämlich sicher, dass die Haftungsgrenze überschritten wird und die zur Verfügung stehende Bremsverzögerung niemals ausreichend ist, um den Unfall zu verhindern. Daher erübrigt sich jede, zusätzliche Abfrage.

Für eine Teilbremsung mit Eingreifen des ABS (ABS-Fall), bei dem noch die Möglichkeit einer Unfallvermeidung bestehen könnte, muss aber in einer weiteren Abfrage geprüft werden, wie stark die tatsächlich eintretende Längsverzögerung des Fahrzeugs ist, um einen Hinweis auf die eintretende Bremswirkung zu erhalten. Bei Eingreifen eines ABS wird immer bis an die Reibwertgrenze gebremst, so dass in dieser Situation der Reibwert mit der Fahrzeuglängsverzögerung direkt korreliert ist und aus dieser abgeleitet werden könnte. Zur Prüfung, ob ein kritischer Zustand vorliegt, bei dem eine Kollision aufgrund des herabgesetzten Reibwertes nicht mehr vermeidbar wäre, wird ein Reibwert(µ) von kleiner 0,5 als kritisch angesehen. Daher wird im ABS-Fall die Fahrzeuglängsverzögerung bestimmt und mit einem vorgegebenen Schwell- oder Grenzwert von z. B. 5 m/s² verglichen. Unterschreitet die Fahrzeuglängsverzögerung diesen Schwellwert, d.h. beträgt die Fahrzeuglängsverzögerung beispielsweise nur 4 m/s², so liegt dies an der mangelnden Haftung des Fahrbahnbelages und es wird das Insassenschutzmittel aktiviert, weil eine ausreichende Soll-Bremsverzögerung niemals erreicht werden könnte und ein Unfall sehr wahrscheinlich ist.

Als ergänzende Maßnahme, um in fahrdynamischen Grenzsituationen einen besseren vorbeugenden Schutz bereitzustellen, wird die Verzögerungskennlinie für die Soll-Bremsverzögerung herabgesetzt, wenn das ABS oder allgemein ein Fahrdynamik-Regelsystem für eine vorgegebene Zeitdauer aktiviert ist. Hierzu wird das Fahrdynamik-Regelsystem auf eine Aktivierung überwacht. Dabei wird geprüft, ob das Fahrdynamik-Regelsystem für eine vorgegebene Zeitdauer von z.B. mindestens 0,15 s aktiviert ist. Ist dies der Fall, so wird mit der Herabsetzung der Verzögerungskennlinie eine erleichterte Auslösung von vorbeugenden Maßnahmen erreicht, indem die Verzögerungskennlinie durch die vom Radarsystem vorgegebene Soll-Bremsverzögerung leichter überschritten werden kann. Dies ist insbesondere in Zusammenhang mit der voran stehend beschriebenen Abfrage für niedrigen Reibwert (low-µ) sinnvoll, welche die Aktivierung des ABS voraussetzt.

Zweckmäßigerweise werden parallel verschiedene Fahrdynamik-Regelsysteme, z. B. ein Antiblockiersystem ABS, eine elektronische Bremskraftverteilung EBV, ein elektronisches Stabilisierungsprogramm ESP, eine Antriebsschlupfregelung ASR auf eine Aktivierung beispielsweise von mindestens 0,1 s überwacht.

Beispielsweise kann is zusätzliche Bedingung aus der vom Radarsystem vorgegebenen Soll-Bremsverzögerung mittels eines Fahrzeugmodells ein Soll-Bremsmoment ermittelt werden, welches zur Bestimmung des an die Räder vorgegebenen Bremsdrucks benötigt wird, um anhand einer von der Fahrzeuggeschwindigkeit abhängigen Abbremsungskennlinie eine Entscheidung über die Auslösung von Insassenschutzmitteln zu treffen.

Das Soll-Bremsmoment folgt der Soll-Bremsverzögerung mit Verzögerung, was der Wirkung eines Tiefpassfilters entspricht. In einer Ausführung wird das Insassenschutzmittel nur dann angesteuert, wenn (auch) das notwendige Soll-Bremsmoment oberhalb einer Abbremsungskennlinie liegt. Die Aktivierung des Insassenschutzsystems in Abhängigkeit vom vorgegebenen Sollbremsmoment stellt sicher, dass bei Vorliegen einer autonomen Teilbremsung mit moderater Soll-Bremsverzögerung (keine Notbremsung) das Insassenschutzsystem erst nach Bremsbeginn aktiviert wird und somit eine Zuschaltung erst dann erfolgt, wenn der Fahrer durch die autonome Teilbremsung bereits vorgewarnt ist.

Eine ähnliche Wirkung kann erzielt werden, wenn durch eine entsprechende Abfrage eines Zeitgebers (Timer) sichergestellt wird, dass die Insassenschutzmittel erst nach Ablauf einer Zeitspanne von z.B. 400 ms ab Aktivierung der autonomen Teilbremsung ausgelöst werden.

Die Erfindung wird im Folgenden anhand eines Ausführungsbeispiels näher erläutert.

Dabei zeigen:
- Fig. 1: ein Blockschaltbild einer erfindungsgemäßen Vorrichtung,
- Fig. 2: ein Diagramm für die von der Fahrzeuggeschwindigkeit abhängigen Verzögerungskennlinie, und
- Fig. 3: ein Diagramm für die von der Fahrzeuggeschwindigkeit abhängigen Abbremsungskennlinie.

Einander entsprechende Teile sind in allen Figuren mit den gleichen Bezugszeichen versehen.

Figur 1 zeigt schematisch in einem Blockschaltbild ein Fahrzeug 1, welches mit einem Fahrdynamikregelsystem 2 und einem Umgebungserfassungssystem 3 ausgerüstet ist. Beispielsweise umfasst das Fahrzeug 1 als Fahrdynamikregelsystem 2, welches alle fahrdynamischen Fahrzustandsdaten erfasst, ein oder mehrere der folgenden Systeme, z. B. ein Antiblockiersystem, eine Antriebsschlupfregelung, ein elektronisches Stabilitätsprogramm, eine elektronische Bremskraftverteilung oder ein Bremsregelsystem. Als Umgebungserfassungssystem 3 ist beispielsweise eine Radareinheit, ein Ultraschallsensor oder eine Kamera vorgesehen.

Das Fahrzeug 1 weist zudem mindestens ein mit einer Steuereinheit 4 verbundenes, reversibles Insassenschutzmittel 5 auf. Als Insassenschutzmittel 5 dienen beispielsweise ein elektrischer Gurtstraffer, Gurt-Vorstraffer oder Gurt-Aufrollstraffer, eine elektrische Sitzverstellvorrichtung, eine elektrische Verstellvorrichtung von Fahrzeugöffnungen und/oder eine elektrisch verstellbare Prallschutzvorrichtung. Das oder die Insassenschutzmittel 5 sind reversibel, d.h. sie können mehrmals von einem Ausgangszustand in einen Wirkzustand gebracht und wieder zurückversetzt werden.

Die Steuereinheit 4 ist mit dem Fahrdynamikregelsystem 2 und der Umgebungserfassungseinheit 3 beispielsweise über einen Datenbus verbunden.

Die Steuereinheit 4 überprüft fortlaufend, ob ein Bremsvorgang in Art einer von einem Fahrer ausgelösten Not- oder Teilbremsung oder eine autonome Teil- oder Notbremsung vorliegt. Zur Deaktivierung der Insassenschutzmittel, welche z.B. aufgrund einer aktiven Notbremsung (BAS-Eingriff) oder einer autonomen Teilbremsung aktiviert wurde, wird zusätzlich zum Wegfall der identifizierten kritischen Fahrsituation geprüft, ob die aktive Notbremsung und die autonome Teilbremsung noch aktiv sind. Ist dies der Fall, so bleibt die Ansteuerung des Insassenschutzmittels aktiv, anderenfalls wird die Ansteuerung deaktiviert oder rückgesetzt.

Das Fahrdynamikregelsystem 2 ermittelt mittels einer zugeordneten Sensorik S1 Fahrzugszustandsdaten, z.B. die Fahrgeschwindigkeit, die Raddrehzahlen des Fahrzeugs 1, eine Ist-Giergeschwindigkeit, die Soll-Giergeschwindigkeit, eine Querbeschleunigung und/oder eine Längsbeschleunigung. Als Sensorik S1 sind beispielsweise ein Längsbeschleunigungssensor, ein Lenkwinkelsensor, ein Querbeschleunigungssensor und Rad-Drehzahlsensoren vorgesehen, die gegebenenfalls zur Ermittlung weiterer Fahrzustandsdaten kombiniert ausgewertet werden. Beispielsweise wird mittels des Fahrdynamikregelsystems 2 ein Übersteuern des Fahrzeugs 1 identifiziert, wenn das Heck ausbricht und ein gefährlicher Fahrzustand eintreten könnte.

Das Umgebungserfassungssystem 3 ermittelt mittels einer zugehörigen Sensorik S2 Fahrzustandsdaten, z. B. über den Zustand der voraus liegenden Fahrbahn, über ein voraus liegendes Hindernis. Aus der Abweichung zwischen Soll- und Istwerten der erfassten Fahrzustandsdaten bzw. aus der Überschreitung und/oder Unterschreitung von vorgegebenen Schwellwerten wird eine kritische Fahrsituation oder ein kritischer Fahrzustand ermittelt. Mittels des Umgebungserfassungssystems 3 wird beispielsweise ein sich näherndes voraus liegendes Hindernis identifiziert und eine mögliche Kollision angezeigt, die eine Teil- oder Notbremsung erforderlich macht. Hierzu ermittelt das Umgebungserfassungssystem 3 eine notwendige Soll-Bremsverzögerung a, welche notwendig ist, um die Kollision zu verhindern oder deren Folgen zu dämpfen.

Wird eine derartige kritische Fahrsituation erkannt, so erfolgt entweder die direkte Ansteuerung des oder der Insassenschutzmittel 5 oder es erfolgt zunächst nur eine Absenkung der Verzögerungskennlinie mittels der Steuereinheit 4, beispielsweise für den Fall des Übersteuerns oder Untersteuerns, unter Auswertung der Stellgröße G des Fahrdynamikregelsystems 2 oder für den Fall einer Notbremsung unter Auswertung der ermittelten Bremsverzögerung a des Umgebungserfassungssystems 3. Ein hoher Wert der Stellgröße G ist ein Indikator für ein starkes Übersteuern beziehungsweise ein drohendes starkes Übersteuern des Fahrzeugs und/oder eine starke Bremsverzögerung a ist ein Indikator für eine Notbremsung und können zum Setzen eines Steuersignals SS zur Aktivierung eines Insassenschutzmittels führen.

Nachfolgend werden verschiedene Bedingungen zur Prüfung der angeforderten Bremsverzögerung a für eine differenzierte Ansteuerung des Insassenschutzmittels 5 näher beschrieben.

Das Umgebungserfassungssystem 3 ist in der Lage Hindernisse zu erkennen, die zu einer Kollision führen können. Mittels der zugehörigen Recheneinheit oder Steuereinheit 4, die separat ausgebildet oder integriert sein kann, wird eine notwendige Bremsverzögerung a (auch Soll-Bremsverzögerung genannt) ermittelt, die eine Kollision verhindern würde. In Verbindung mit einem geeigneten Bremsassistenz- oder Bremsregelsystem können entsprechende Bremsmomente für eine Teil- oder Notbremsung vorgegeben werden. Das Bremsassistenzsystem ist in der Figur als ein Fahrdynamik-Regelsystem 2 dargestellt.

Bei einem Eingreifen des Bremsassistenzsystems (BAS) wird der Fahrer bei einer Notbremsung unterstützt, indem das vom Fahrer angeforderte Bremsmoment bedarfsgerecht erhöht wird, um eine Kollision zu verhindern. In einer weiteren Funktion löst das Radar gestützte Bremsassistenzsystem eine autonome Teil- oder Notbremsung aus, wenn der Fahrer auf eine drohende Kollision nicht reagiert.

Von Bedeutung ist, dass die vom Bremsassistenzsystem ausgeführten Bremsfunktionen und die Aktivierung von Schutzmitteln für den Fahrer plausibel aufeinander abgestimmt sind. Hierzu wird in erster Linie die vom Umgebungserfassungssystem 3 oder deren Steuereinheit 4 angeforderte Soll-Bremsverzögerung oder Bremsverzögerung a bzw. das angeforderte Soll-Bremsmoment anhand von weiteren Kriterien überprüft.

### I. Unterstützung des Fahrers bei einer Teil- oder Notbremsung durch das Bremsassistenzsystem:

Zunächst wird geprüft, ob das Bremsassistenzsystem aktiviert ist und eine Anforderung für eine Soll-Bremsverzögerung a vorliegt. Ist dies der Fall, wird geprüft, ob die Fahrzeuggeschwindigkeit V_{Fahrzeug} größer als eine vorgegebene Mindestgeschwindigkeit, beispielsweise größer 30 km/h ist. Fährt das Fahrzeug schneller als 30 km/h und liegt weiterhin eine Aktivierung des Bremsassistenzsystems vor, so wird die ermittelte Bremsverzögerung a (= Soll-Bremsverzögerung) anhand einer Verzögerungskennlinie KV überprüft. In Figur 2 ist die Soll-Beschleunigung dargestellt, welche bei einer Bremsung.dem Wert -a entspricht, weshalb auch die Kennlinie mit negativem Vorzeichen als -KV eingezeichnet ist. Das Insassenschutzmittel 5 wird nur dann aktiviert, wenn die ermittelte Bremsverzögerung a oberhalb der Verzögerungskennlinie KV liegt beziehungsweise -a unterhalb -KV liegt. Auf die Kennlinie ist bereits bei den allgemeinen Erläuterungen der Erfindung eingegangen worden.

Da die mittels des Umgebungserfassungssystems 3 ermittelte und vorgegeben Soll-Bremsverzögerung a stets auf einem Reibwert µ von 0,9 basiert, erfolgt in einer Weiterbildung parallel eine Abfrage auf den tatsächlich vorliegenden Reibwert µ, was bei einem ABS-Eingriff leicht möglich ist, weil die Räder bis zur Reibwertgrenze abgebremst werden.

### II. Unterstützung des Fahrers bei einer Teil- oder Notbremsung durch das Bremsassistenzsystem und gleichzeitigem ABS-Eingriff.

Zunächst wird geprüft, ob das Bremsassistenzsystem aktiviert ist und eine Anforderung für eine Soll-Bremsverzögerung a vorliegt. Ist dies der Fall, wird geprüft, ob die Fahrzeuggeschwindigkeit V_{Fahrzeug} größer als eine vorgegebene Mindestgeschwindigkeit, beispielsweise größer 30 km/h ist. Fährt das Fahrzeug schneller als 30 km/h und liegt weiterhin eine Aktivierung des Bremsassistenzsystems vor, so wird zusätzlich geprüft, ob die Räder - z.B. beider Vorderräder - von einem Antiblockiersystem ABS, geregelt werden, um ein Blockieren zu verhindern. Insbesondere wird geprüft, ob die ABS-Funktion des Fahrdynamikregelsystems 2 mindestens 0,15 s aktiviert ist. Ist dies der Fall, so wird die vorgegebene Soll-Bremsverzögerung a wie bereits weiter oben beschrieben auf Verträglichkeit mit dem tatsächlich vorliegenden Reibwert µ überprüft.

Dazu wird die Fahrzeuglängsverzögerung aₓ bestimmt und auf eine Unterschreitung eines vorgegebenen Schwellwerts von beispielsweise 5 m/s² überwacht. Beträgt die Fahrzeuglängsverzögerung aₓ beispielsweise 4 m/s², so liegt ein Reibwert µ unterhalb von 0,5 und somit eine besonders glatte Fahrbahn vor. In einer Ausführung der Erfindung führt dies bereits zur Auslösung eines Insassenschutzmittels.

In einer besonderen Ausgestaltung wird in einem weiteren Schritt zusätzlich die angeforderte Soll-Bremsverzögerung a anhand der Verzögerungskennlinie KV (siehe Figur 2) beziehungsweise einer für diesen Fall angepassten Verzögerungskennlinie mit erniedrigten Eckwerten für die kritische Bremsverzögerung überprüft. Das Insassenschutzmittel 5 wird also nur dann aktiviert, wenn auch die Soll-Bremsverzögerung a oberhalb der Verzögerungskennlinie KV liegt und alle weiteren voran stehenden Bedingungen erfüllt sind. Aufgrund der ABS-Regelung der Vorderräder durch das Antiblockiersystem und des identifizierten Reibwertes µ unterhalb von ca. 0,5 wird erkannt, dass eine Kollision mit großer Wahrscheinlichkeit nicht mehr vermeidbar ist. Daher wird das Insassenschutzmittel 5 bereits bei geringen Soll-Bremsverzögerungsanforderungen, z. B. oberhalb von nur 3 m/s², ausgelöst. Die Fahrzeuglängsverzögerung aₓ kann beispielsweise mittels eines Beschleunigungssensors oder mit Hilfe der Fahrzeugreferenzgeschwindigkeit, die im Bremsregelsystem ermittelt wird, bestimmt werden.

### III. Für eine autonome Teilbremsung durch das Bremsassistenzsystem:

Für eine autonome Teilbremsung wird zusätzlich das angeforderte Bremsmoment ausgewertet, um sicherzustellen, dass die Aktivierung der Insassenschutzmittel erst nach Bremsbeginn erfolgt, damit Zeit zur Vorwarnung des Fahrers bleibt und dieser nicht unnötig durch die Straffung eines Gurtstraffers gestört wird.

In einem ersten Schritt wird geprüft, ob das Bremsassistenzsystem aktiv ist und ein Bremsmoment angefordert ist. Anschließend wird die Fahrzeuggeschwindigkeit V_{Fahrzeug} auf Überschreitung einer Mindestgeschwindigkeit, z. B. von 30 km/h, geprüft. Das Insassenschutzsystem 5 wird ausgelöst, wenn das angeforderte Bremsmoment oberhalb einer vorgegebenen Abbremsungskennlinie KA liegt, wobei Figur 3 diese Größen wiederum mit negativem Vorzeichen zeigt. Wie voran stehend bereits erläutert, ist das Soll-Bremsmoment eine Größe die mittels eines Fahrzeugsmodells, bei dem unter anderem auch die Fahrzeugmasse eingeht, aus der vorgegebenen Soll-Bremsverzögerung berechnet wird. Dabei entspricht beispielsweise ein Bremsmoment von 1000 Nm ungefähr einer Bremsverzögerung a von 1,5 m/s² und ein Bremsmoment von 2000 Nm ungefähr einer Bremsverzögerung a von 3,5 m/s².

Für alle vorgenannten Ausführungsbeispiele I bis III wird nachfolgend die Deaktivierung des Insassenschutzmittels 5 näher beschrieben.

Um das Insassenschutzmittel 5 auch bei Objektverlust des Umgebungserfassungssystems 3 aktiviert zu halten, sind besondere Rücksetzbedingen definiert.

Dazu wird das Steuersignal SS zur Aktivierung des Insassenschutzmittels solange gesetzt, bis die Fahrsituation für den Fahrer plausibel als nicht mehr kritisch eingestuft wird. Für ein hinreichend langes gesetztes Steuersignal SS erfolgt die Rücksetzung des Steuersignals SS nach Wegfall des auslösenden Fahrzustands und in Abhängigkeit von mindestens einer weiteren Bedingung, die indikativ für ein kontrollierbares Fahrverhalten ist.

Bei einer von einem Fahrer über das Bremsassistenzsystem eingeleiteten Bremsung oder einer autonomen Teilbremsung muss daher für mindestens 1 Sekunde folgende Bedingung erfüllt sein: Weder der vom Fahrer ausgelöste Bremsvorgang des Bremsassistenzsystems noch die autonome Teilbremsung sind noch aktiv.

Durch diese Abfrage mit Zeit-Bedingung wird sichergestellt, dass die Ansteuerung des reversiblen Insassenschutzmittels 5 (= auch PRE-SAFE-Aktion genannt) bei kurzzeitigem Objektverlust nicht sofort abgebrochen wird, wenn andere, fahrdynamischen Kriterien (noch) nicht erfüllt werden können. Erfolgt im Anschluss an die Ansteuerung des Insassenschutzmittels 5 durch eine vom Fahrer ausgelöste Bremsung oder eine autonome Teilbremsung ein Ausweichmanöver o.ä. greifen selbstverständlich die später erfüllten fahrdynamischen Rücksetzbedingungen auch nach Ablauf dieser Zeit-Bedingung ein.

## Patentansprüche

1. Verfahren zur Ansteuerung eines Insassenschutzmittels (5) in einem Fahrzeug (1) mit einer Sensorik, welche Fahrzustandsdaten erfasst, und mit einem reversiblen Insassenschutzmittel (5), welches vor dem Kollisionszeitpunkt ausgelöst und dadurch in Wirkstellung gebracht werden kann, wobei von einer vorausschauenden Umgebungserfassungseinheit (3) im Vorfeld einer drohenden Kollision eine Soll-Bremsverzögerung ermittelt wird, welche bei Überschreiten eines Schwellwertes das Insassenschutzmittel (5) auslöst,
**dadurch gekennzeichnet,**
**dass** die angeforderte Soll-Bremsverzögerung (a) anhand einer von der Fahrzeuggeschwindigkeit (V_{Fahrzeug}) abhängigen Verzögerungskennlinie (KV) auf die Überschreitung eines Schwellwertes geprüft und für eine differenzierte Ansteuerung des Insassenschutzmittels genutzt wird, indem die Verzögerungskennlinie (KV) oberhalb einer Geschwindigkeitsschwelle mit zunehmender Geschwindigkeit (V_{Fahrzeug}) innerhalb eines Geschwindigkeitsbereichs kontinuierlich auf einen Sockelbetrag abnimmt und das Insassenschutzmittel (5) ausgelöst wird, wenn die Soll-Bremsverzögerung (a) die Verzögerung, vorgegeben durch die Verzögerungskennlinie (KV), überschreitet, wobei die Verzögerungskennlinie (KV) der kritischen Bremsverzögerung in Abhängigkeit von der Fahrzeuggeschwindigkeit entspricht.

2. Verfahren nach Anspruch 1,
**dadurch gekennzeichnet,**
**dass** die Verzögerungskennlinie (KV) davon abhängt, ob der Bremsvorgang durch den Fahrer oder autonom durch die Umgebungserfassungseinheit (3) eingeleitet wurde.

3. Verfahren nach Anspruch 1 oder 2,
**dadurch gekennzeichnet**,
bei einem durch den Fahrer ausgelösten Notbremsvorgang höhere Soll-Bremsverzögerungen erforderlich sind, um das Insassenschutzmittel (5) auszulösen, als bei einem autonomen Bremsvorgang.

4. Verfahren nach Anspruch 1,
**dadurch gekennzeichnet,**
**dass** das Insassenschutzmittel (5) nur dann angesteuert wird, wenn die Fahrzeuggeschwindigkeit (V_{Fahzeug}) größer einer vorgegebenen Mindestgeschwindigkeit ist.

5. Verfahren nach Anspruch 1,
**dadurch gekennzeichnet,**
**dass** die Verzögerungskennlinie (KV) in Abhängigkeit von einem erfassten Fahrbahnreibwert (µ) vorgegeben wird.

6. Verfahren nach einem der vorangehenden Ansprüche,
**dadurch gekennzeichnet,**
**dass** in einem parallelen Auslösepfad im Falle eines Eingriffs eines Antiblockiersystem (ABS) die Fahrzeuglängsverzögerung (aₓ) bestimmt und bei Unterschreiten eines vorgegebenen Schwellwertes, insbesondere von 5,0 m/s² , die Aktivierung des Insassenschutzmittels (5) zugelassen oder veranlasst wird.

7. Verfahren nach Anspruch 6,
**dadurch gekennzeichnet,**
**dass** die Aktivierung des Insassenschutzmittels (5) veranlasst wird, wenn als weitere Bedingung feststeht, dass die Soll-Bremsverzögerung (a) die Verzögerungskennlinie überschreitet.

8. Verfahren nach Anspruch 1 oder 7,
**dadurch gekennzeichnet,**
**dass** im Falle eines Eingriffs eines Fahrdynamikregelsystems (2), insbesondere einem Antiblockiersystem (ABS), die Verzögerungskennlinie (KV) herabgesetzt wird.

9. Verfahren nach Anspruch 1 oder 7,
**dadurch gekennzeichnet,**
**dass** die Verzögerungskennlinie (KV) herabgesetzt wird, wenn ein Fahrdynamik-Regelsystem (2), insbesondere ein ABS, für eine vorgegebene Zeitdauer, insbesondere für mindestens 0,1 s aktiviert ist.

10. Verfahren nach einem der vorangehenden Ansprüche,
**dadurch gekennzeichnet,**
**dass** parallel zu oder als zusätzliche Bedingung zu der angeforderten Soll-Bremsverzögerung ein angefordertes Soll-Bremsmoment anhand einer von der Fahrzeuggeschwindigkeit (V_{Fahrzeug}) abhängigen Abbremsungskennlinie (KA) geprüft wird.

11. Verfahren nach Anspruch 10,
**dadurch gekennzeichnet,**
**dass** das Insassenschutzmittel (5) angesteuert wird, wenn das notwendige Sollbremsmoment oberhalb der Abbremsungskennlinie (KA) liegt.

12. Verfahren nach Anspruch 10,
**dadurch gekennzeichnet,**
**dass** das Insassenschutzmittel (5) erst nach Ablauf einer vorgegebenen Zeitspanne ab Aktivierung einer autonomen, durch die Umgebungserfassungseinheit eingeleiteten Teilbremsung ausgelöst wird.

13. Vorrichtung zur Durchführung eines Verfahrens nach einem der vorhergehenden Ansprüche,
**gekennzeichnet durch**
ein reversibles Insassenschutzmittel (5) und eine Steuereinheit (4), mittels welcher eine angeforderte Soll-Bremsverzögerung (a) anhand einer von der Fahrzeuggeschwindigkeit (V_{Fahrzeug)} abhängigen Verzögerungskennlinie (KV) auf das Vorliegen eines kritischen Fahrzustands geprüft wird, wobei bei Vorliegen des kritischen Fahrzustands das Insassenschutzmittel (5) aktivierbar ist und wobei für eine differenzierte Ansteuerung des Insassenschutzmittels die Verzögerungskennlinie (KV) oberhalb einer Geschwindigkeitsschwelle mit zunehmender Geschwindigkeit (V_{Fahrzeug}) innerhalb eines Geschwindigkeitsbereichs kontinierlich auf einen Sockelbetrag abnimmt und das Insassenschutzmittel (5) auslöst, wenn die Soll-Bremsverzögerung (a) die Verzögerung, vorgegeben durch die Verzögerungskennlinie (KV), überschreitet, wobei die Verzögerungskennlinie (KV) der kritischen Bremsverzögerung in Abhängigkeit von der Fahrzeuggeschwindigkeit entspricht.

## Claims

1. Method for triggering a passenger protection means (5) in a vehicle (1), comprising a sensor system which detects vehicle state data and a reversible passenger protection means (5) which is triggered before the time of collision and can thereby be brought into an effective position, wherein a forward-looking surroundings detection unit (3) determines ahead of an imminent collision a set point braking deceleration which triggers the passenger protection means (5) if a threshold value is exceeded,
**characterised in that**
the set point braking deceleration (a) is, using a deceleration characteristic (KV) depending on the vehicle speed (V_{Fahrzeug}), checked for exceeding a threshold value and used for a differentiated triggering of the passenger protection means by continuously reducing the deceleration characteristic (KV) to a basic amount above a speed threshold as the speed (V_{Fahrzeug}) increases within a speed range and by triggering the passenger protection means (5) if the set point braking deceleration (a) exceeds the deceleration preset by the deceleration characteristic (KV), the deceleration characteristic (KV) corresponding to the critical brake deceleration as a function of the vehicle speed.

2. Method according to claim 1,
**characterised in that**
the deceleration characteristic (KV) depends on whether the braking process was initiated by the driver or autonomously by the surroundings detection unit (3).

3. Method according to claim 1 or 2,
**characterised in that**
if emergency braking was triggered by the driver, higher set point braking decelerations are required to trigger the passenger protection means (5) than in an autonomous braking process.

4. Method according to claim 1,
**characterised in that**
the passenger protection means (5) is triggered only if the vehicle speed (V_{Fahrzeug}) is higher than a preset minimum speed.

5. Method according to claim 1,
**characterised in that**
the deceleration characteristic (KV) is preset as a function of a detected road surface friction coefficient (µ).

6. Method according to any of the preceding claims,
**characterised in that**
in a parallel triggering path, in the case of an intervention of an anti-lock system (ABS), the longitudinal deceleration (aₓ) of the vehicle is determined, and if it falls below a preset threshold value, in particular below 5.0 m/s², the activation of the passenger protection means (5) is enabled or initiated.

7. Method according to claim 6,
**characterised in that**
the activation of the passenger protection means (5) is initiated if a further condition that the set point braking deceleration (a) exceeds the deceleration characteristic is met.

8. Method according to claim 1 or 7,
**characterised in that**
in the case of an intervention of a dynamic drive control system (2), in particular of an anti-lock system (ABS), the deceleration characteristic (KV) is reduced.

9. Method according to claim 1 or 7,
**characterised in that**
the deceleration characteristic (KV) is reduced if a dynamic drive control system (2), in particular an ABS, is activated for a preset duration, in particular for at least 0.1 s.

10. Method according to any of the preceding claims,
**characterised in that**
parallel to or as an additional precondition for the requested set point braking deceleration, a requested set point braking torque is checked using a deceleration characteristic (KA) dependent on the vehicle speed (F_{Vahrzeug})

11. Method according to claim 10,
**characterised in that**
the passenger protection means (5) is triggered if the required set point braking torque is above the deceleration characteristic (KA).

12. Method according to claim 10,
**characterised in that**
the passenger protection means (5) is only triggered after a preset period of time has elapsed since the activation of an autonomous partial braking process initiated by the surroundings detection unit.

13. Device for carrying out a method according to any of the preceding claims,
**characterised by**
a reversible passenger protection means (5) and a control unit (4) by means of which a requested set point braking deceleration (a) is, using a deceleration characteristic (KV) dependent on the vehicle speed (V_{Fahrzeug}), checked for a critical driving state, wherein the passenger protection means (5) can be activated in the presence of a critical driving state and wherein, for a differentiated triggering of the passenger protection means, the deceleration characteristic (KV) is continuously reduced to a basic amount above a speed threshold as the speed (V_{Fahrzeug}) increases within a speed range and the passenger protection means (5) can be triggered if the set point braking deceleration (a) exceeds the deceleration preset by the deceleration characteristic (KV), the deceleration characteristic corresponding to the critical brake deceleration as a function of the vehicle speed.

## Revendications

1. Procédé de commande d'un moyen de protection du passager (5) dans un véhicule automobile (1) comprenant un mécanisme sensoriel détectant des données d'état de la conduite, et un moyen de protection réversible du passager (5) qui peut être déclenché avant le moment de la collision et être ainsi amené en position active, une unité de détection de l'environnement par anticipation (3) permettant de déterminer dans un champ préalable à une collision imminente une décélération de freinage théorique, laquelle déclenche, par dépassement d'une valeur seuil, ledit moyen de protection du passager (5), **caractérisé en ce que** la décélération de freinage théorique exigée (a) est contrôlée, quant au dépassement d'une valeur seuil, au moyen d'une courbe caractéristique de décélération (KV) dépendant de la vitesse du véhicule (V_{véhicule}) et est utilisée pour une commande nuancée du moyen de protection du passager, en réduisant en continu la courbe caractéristique de décélération (KV) au-dessus d'un seuil de vitesse avec une vitesse croissante (V_{véhicule}) à une valeur de base dans une plage de vitesse et en déclenchant le moyen de protection du passager (5), lorsque la décélération de freinage théorique (a) dépasse la décélération prédéterminée par la courbe caractéristique de décélération (KV), la courbe caractéristique de décélération (KV) correspondant à la décélération de freinage critique en fonction de la vitesse du véhicule.

2. Procédé selon la revendication 1, **caractérisé en ce que** la courbe caractéristique de décélération (KV) dépend de ce que le processus de freinage a été déclenché par le conducteur ou de manière autonome par l'unité de détection de l'environnement (3).

3. Procédé selon la revendication 1 ou la revendication 2, **caractérisé en ce que** pour déclencher le moyen de protection du passager (5) en cas d'un processus de freinage d'urgence déclenché par le conducteur, les décélérations de freinage théoriques nécessaires sont plus élevées que celles d'un processus de freinage autonome.

4. Procédé selon la revendication 1, **caractérisé en ce que** le moyen de protection du passager (5) ne se déclenche que si la vitesse du véhicule (V_{véhicule}) est supérieure à une vitesse minimum prédéfinie.

5. Procédé selon la revendication 1, **caractérisé en ce que** la courbe caractéristique de décélération (KV) est prédéfinie en fonction d'un coefficient d'adhérence à la chaussée (p) détectée.

6. Procédé selon l'une quelconque des revendications précédentes, **caractérisé en ce que** dans un chemin de déclenchement parallèle en cas d'une intervention d'un système antiblocage (ABS) la décélération longitudinale du véhicule (aₓ) est déterminée et en cas de dépassement d'une valeur seuil prédéfinie, en particulier 5,0 m/s², l'activation du moyen de protection d'un passager (5) est autorisée ou engagée.

7. Procédé selon la revendication 6, **caractérisé en ce que** l'activation du moyen de protection du passager (5) est engagée lorsqu'il est établi en tant qu'une autre condition que la décélération de freinage théorique (a) dépasse la courbe caractéristique de décélération.

8. Procédé selon la revendication 1 ou la revendication 7, **caractérisé en ce qu'**en cas d'une intervention d'un système de réglage de la dynamique de translation de véhicule (2), en particulier un système antiblocage (ABS) la courbe caractéristique de décélération (KV) est abaissée.

9. Procédé selon la revendication 1 ou 7, **caractérisé en ce que** la courbe caractéristique de décélération (KV) est abaissée lorsqu'un système de réglage de la dynamique de translation de véhicule (2), en particulier un système ABS, est activé pour une durée prédéfinie, en particulier pour au moins 0,1 s.

10. Procédé selon l'une quelconque des revendications précédentes, **caractérisé en ce que** en parallèle à ou en tant que condition supplémentaire à la décélération de freinage théorique exigée, un couple de freinage théorique exigé est contrôlé au moyen d'une courbe caractéristique de freinage (KA) en fonction de la vitesse du véhicule (V_{véhicule}).

11. Procédé selon la revendication 10, **caractérisé en ce que** le moyen de protection du passager (5) se déclenche si le couple de freinage théorique exigé se trouve au-dessus de la courbe caractéristique de freinage (KA).

12. Procédé selon la revendication 10, **caractérisé en ce que** le moyen de protection du passager (5) se déclenche uniquement après l'écoulement d'une période de temps prédéfinie à partir de l'activation d'un freinage partiel autonome déclenché par l'unité de détection de l'environnement.

13. Dispositif pour mettre en oeuvre un procédé selon l'une quelconque des revendications précédentes, **caractérisé par** un moyen de protection réversible du passager (5) et une unité de commande (4), au moyen desquels une décélération de freinage théorique (a) exigée est contrôlée, quant à l'existence d'un état de conduite critique, au moyen d'une courbe caractéristique de décélération (KV) dépendant de la vitesse du véhicule (V_{véhicule}), en cas d'état de conduite critique, le moyen de protection d'un passager (5) est activé, et pour une commande nuancée du moyen de protection du passager, la courbe caractéristique de décélération (KV) au-dessus d'un seuil de vitesse avec une vitesse croissante (V_{véhicule}) dans une plage de vitesse étant abaissée en continu à une telle valeur de base, et le moyen de protection du passager (5) étant déclenché lorsque la décélération de freinage théorique (a) dépasse la décélération définie par la courbe caractéristique de freinage (KV), la courbe caractéristique de décélération (KV) correspondant à la décélération de freinage critique en fonction de la vitesse du véhicule.
